# EUROPEAN PATENT SPECIFICATION

(11) **EP 4 497 609 B1**
(45) Date of publication and mention of the grant of the patent: **10.12.2025**
(21) Application number: 24187921.2
(22) Date of filing: 11.07.2024
(51) Int. Cl.: B60C 11/03, B60C 11/12

(54) **PNEUMATIC TIRE**
LUFTREIFEN
PNEUMATIQUE

(30) Priority: 28.07.2023 JP 2023123441
(43) Date of publication of application: 29.01.2025
(73) Proprietor: Toyo Tire Corporation, Itami-shi, Hyogo 664-0847 (JP)
(72) Inventor: AMIMOTO, Hiroki, Hyogo, 664-0847 (JP)
(74) Representative: Müller-Boré & Partner Patentanwälte PartG mbB

(56) References cited:
- EP-A1- 4 173 849
- EP-B1- 1 437 238
- EP-B1- 3 392 064
- EP-B1- 3 403 852
- JP-B2- 7 184 628

## Description

### BACKGROUND OF THE INVENTION

### Field of the Invention

The present invention relates to a pneumatic tire.

### Related Art

Conventionally, a tire has been known which includes a tread including a tread surface which contacts the road surface. This tread has a so-called block pattern in which a plurality of blocks are defined by a plurality of grooves extending in the tire-circumferential direction or in a direction intersecting the tire-circumferential direction. The blocks are arranged in the tire-circumferential direction. Patent Document 1 discloses a pneumatic tire in which a plurality of thin grooves called sipes are formed in such a block. Sipes have a wavy shape in a tire surface view. For example, wavy shaped sipes having a large amplitude are considered useful in improving the tire grip performance when traveling on snowy roads.

Patent Document 1: Japanese Unexamined Patent Application, Publication No. H11-310013
EP 4 173 849 A1 describes a tire that has a tread portion for which an intended tire rotational direction is specified. The tread portion comprises first inclined land portions defined between first inclined grooves. The first inclined land portion comprises an outer portion having a first wall surface and a second wall surface, and an inner portion having a third wall surface and a fourth wall surface. The angle of the first wall surface is smaller than the angle of the second wall surface, and the angle of the third wall surface is larger than the angle of the fourth wall surface.
EP 3 403 852 B1 describes a tire that comprises a tread portion. The tread portion comprises a plurality of first oblique grooves extending obliquely from a first tread edge positioned on one side in a tire axial direction toward a tire equator. Each of the first oblique grooves comprises a main body portion extending from the first tread edge without reaching the tire equator and a branch portion branching off from the main body portion and extending to cross the tire equator. The branch portion terminates without being connected with other grooves than the first oblique grooves.
EP 1 437 238 B1 describes a tire that has a running strip profile divided by longitudinal grooves and angled grooves into separate profile blocks. These have fine cuts parallel to each other in a wave form, forming profile block elements. At least two fine cuts produce a wave train which has sharply increased amplitude at one point in the semi-wave.
EP 3 392 064 B1 describes a pneumatic tire that includes first and second tread patterns which are formed as substantially line symmetrical shape with respect to a tire equator and are shifted with respect to one another in a tire circumferential direction. Each of the first and second tread patterns is provided with lateral inclined grooves each extending axially inwardly from each tread edge to an axially inner end without reaching the tire equator. The tire is further provided with central connecting grooves each extending across the tire equator to connect lateral inclined grooves arranged on the first and second tread patterns. The central connecting grooves each include a first end and a second end such that the first end is located nearer to the tire equator than the second end and that a depth thereof decreases gradually from the first end to the second end.
JP 4 173 849 A1 describes a pneumatic tire that comprises a tread part including a plurality of blocks. The tread part includes blocks in which are formed first sipes and second sipes which are smaller in width than grooves partitioning the blocks. The second sipe has a width varying in an extending direction of the second sipe, and comprises a non-meshing region where the maximum value of the width of the second sipe is larger than a width of the first sipe. In the non-meshing region, there is a phase difference between a wave-shape part of a first sipe wall included in the second sipe and a wave-shape part of a second sipe wall. The second sipe is arranged at a center area, being a range corresponding 50% of a length in a tire circumferential direction of the block with a center line of the block in the tire circumferential direction as a center

### SUMMARY OF THE INVENTION

However, in this type of tire, the contact pressure on the blocks arranged in the region of the shoulders on both sides in the tire-axial direction of the tread tends to increase; particularly, an area around the sipe of the wavy shape having a large amplitude tends to be subject to great pressure. For this reason, defects such as local wear and block chipping around the sipes may arise, and thus there is room for improvement. In addition, in particular the shoulder blocks have a great effect on the running stability on snowy road surfaces.

The present invention has an object of providing a pneumatic tire for which blocks arranged in the region of the shoulder are unlikely to be damaged, and thus running stability on snowy road surfaces can be secured.

A pneumatic tire according to an aspect of the present invention includes a tread. The tread includes a plurality of blocks arranged in the tire-circumferential direction. The plurality of blocks includes a plurality of shoulder blocks arranged in an outermost area in the tire-axial direction, a plurality of central blocks arranged at the center in the tire-axial direction, and a plurality of intermediate blocks arranged between the shoulder blocks and the central blocks in the tire-axial direction. The shoulder block has at least one shoulder sipe having a wavy shape in a tire surface view, and extending in a direction which intersects the tire-circumferential direction. The central block has at least one central sipe having a wavy shape in a tire surface view and extending in the direction which intersects the tire-circumferential direction. The intermediate block has at least one intermediate sipe having a wavy shape in a tire surface view, and extending in the direction which intersects the tire-circumferential direction. A relationship of CeA ≧ MeA > ShA is established where ShA is amplitude in a tire surface of the shoulder sipe, CeA is amplitude in a tire surface of the central sipe, and MeA is amplitude in a tire surface of the intermediate sipe as MeA.

The present invention makes it possible to provide a pneumatic tire for which blocks arranged in the region of the shoulder are unlikely to be damaged, and thus running stability on snowy road surfaces can be secured.
The claimed invention is defined by the subject-matter of independent claim 1. Preferred embodiments are defined by the dependent claims.

### BRIEF DESCRIPTION OF THE DRAWINGS

FIG. 1 is a partial expanded drawing of an outer circumferential surface of a tire, showing a tread pattern of a pneumatic tire according to an embodiment of the present invention;
FIG. 2 is a perspective view showing a shoulder sipe according to the embodiment;
FIG. 3A is a view of the arrow direction along IIIA-IIIA in FIG. 2;
FIG. 3B is a cross-sectional view along the line IIIB-IIIB in FIG. 2;
FIG. 3C is a cross-sectional view along the line IIIC-IIIC in FIG. 2;
FIG. 3D is a cross-sectional view along the line IIID-IIID in FIG. 2;
FIG. 4 is a cross-sectional view along the line IV-IV in FIG. 3A;
FIG. 5 is a perspective view showing a central sipe according to the embodiment;
FIG. 6A is a view of the arrow direction along VIA-VIA in FIG. 5;
FIG. 6B is a cross-sectional view along the line VIB-VIB in FIG. 5;
FIG. 6C is a cross-sectional view along the line VIC-VIC in FIG. 5;
FIG. 6D is a cross-sectional view along the line VID-VID in FIG. 5;
FIG. 7 is a cross-sectional view along the line VII-VII in FIG. 6A;
FIG. 8A is a plan view schematically showing a wave-shaped opening in a shoulder sipe of the embodiment;
FIG. 8B is a plan view schematically showing a wave-shaped bottom in a shoulder sipe of the embodiment;
FIG. 9A is a plan view schematically showing a wave-shaped opening in a central sipe of the embodiment;
FIG. 9B is a plan view schematically showing a wave-shaped bottom in a central sipe of the embodiment;
FIG. 10A is a plan view schematically showing a wave-shaped opening in an intermediate sipe of the embodiment;
FIG. 10B is a plan view schematically showing a wave-shaped bottom in an intermediate sipe of the embodiment; and
FIG. 11 is a plan view shown by excerpting the shoulder block, the central block and the intermediate block according to the embodiment, and is a view showing the angle in the extending direction of the sipes of each block relative to the tire equatorial plane.

### DETAILED DESCRIPTION OF THE INVENTION

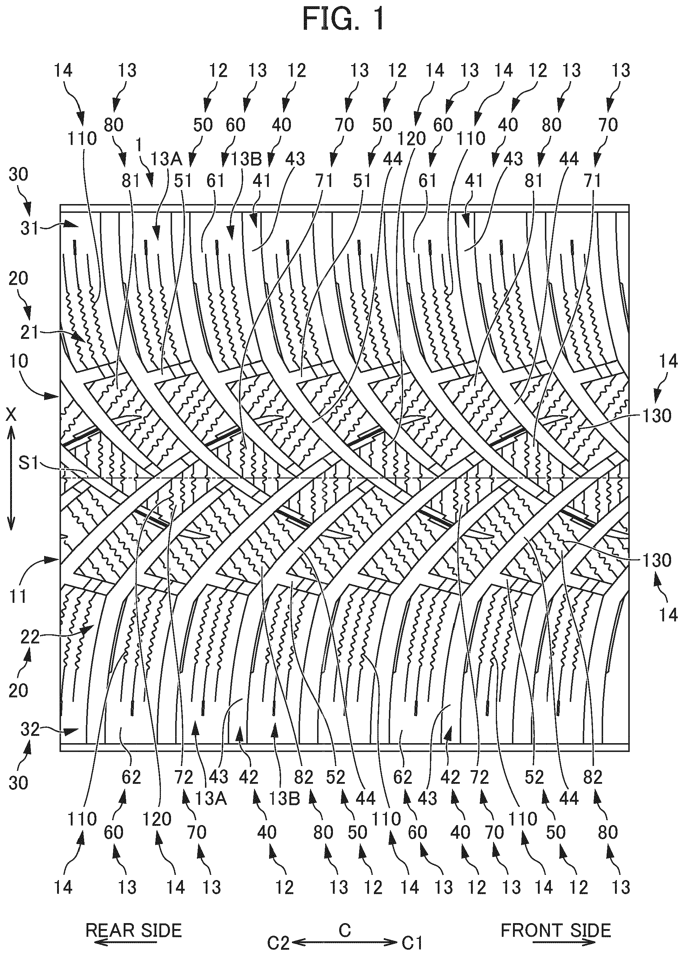

Hereinafter, an embodiment of the present invention will be described while referencing the drawings. FIG. 1 is a view expanding a part of the outer circumferential surface of a tire 1 in a plan view, the tire 1 being a pneumatic tire according to the embodiment. The tire 1 according to the embodiment can be applied to a tire for passenger vehicles; however, besides this, it can be also applied to a tire for various vehicles such as light trucks, trucks and buses

FIG. 1 shows a tire-axial direction X and a tire-circumferential direction C. In the tire 1 according to the embodiment, one side of the tire-circumferential direction is defined as a rotational direction during forward advancement of the vehicle on which the tire 1 is mounted, and C1 direction shown in FIG. 1 corresponds to this rotational direction. It should be noted that the front side referred to in the following description corresponds to the right side of FIG. 1, and indicates a side in the advancing direction of the vehicle defined as the tire rotation direction C1. The rear side corresponds to the left side in FIG. 1, and indicates the reverse direction of the vehicle defined as the rotation direction C2 which is the opposite direction to the tire rotation direction C1.

FIG. 1 shows the tread 10 of the tire 1, and shoulders 30 on both tire-axial sides of the tread 10. The shoulder 30 is a portion transitioning from the tread 10 to each of the sidewalls (not shown) on both sides in the tire axial direction, and is a portion corresponding to the shoulder of the tire 1. The shoulder 30 includes a first shoulder 31 on the upper side in FIG. 1, and a second shoulder 32 on the lower side in FIG. 1.

### (Tread Pattern)

The tread 10 has a tread surface 20 to be in contact with the road surface. A tread pattern 11 is formed on the tread surface 20. The tread pattern 11 is mainly designed by a plurality of grooves 12, and a plurality of blocks 13 defined by the grooves 12. FIG. 1 shows a tire equatorial plane S1, which corresponds to a virtual line extending at the tire-axial center of the tread surface 20 along the tire circumferential direction.

When defining the tire axial direction as the left/right direction, the tread pattern 11 is substantially left/right symmetrical with the tire equatorial plane S1 as the symmetrical line, except that the tread pattern 11 is somewhat displaced in the tire circumferential direction. The tread surface 20 includes a first tread surface 21 close to the first shoulder 31, and a second tread surface 22 close to the second shoulder 32, with the tire equatorial plane S1 as a boundary.

### (Grooves of Tread Pattern)

The grooves 12 of the tread pattern 11 include a plurality of slanted grooves 40, and a plurality of communication grooves 50. The slanted grooves 40 and the communication grooves 50 according to the embodiment are grooves having a groove width exceeding 1 mm.

The slanted grooves 40 are grooves extending from both tire-axial sides toward the tire equatorial plane S1. These slanted grooves 40 are arranged at intervals in the tire-circumferential direction. The plurality of slanted grooves 40 includes first slanted grooves 41 extending from the first shoulder 31 toward the tire equatorial plane S1, and second slanted grooves 42 extending from the second shoulder 32 toward the tire equatorial plane S1. The first slanted groove 41 is formed mainly on the first tread surface 21, and the second sloped groove 42 is mainly formed on the second tread surface 22.

The communication grooves 50 include first communication grooves 51 and second communication grooves 52. Each of the first communication groove 51 communicates with a pair of first slanted grooves 41 adjacent in the tire-circumferential direction. Each of the second communication groove 52 communicates with a pair of second slanted grooves 42 adjacent in the tire-circumferential direction. The first communication grooves 51 are formed in the first tread surface 21, and the second communication groove 52 is formed in the second tread surface 22.

Since the tread pattern 11 is left/right symmetrical, the first slanted grooves 41 and second slanted grooves 42 have similar features, and the first communication grooves 51 and second communication grooves 52 have similar features.

The first slanted grooves 41 are grooves extending from the first shoulder 31 toward the tire equatorial plane S1, in which the slanted grooves 41 generally slope relative to the tire-circumferential direction while gradually curving so that the slanted grooves 41 extend toward the front side and is convex toward the rear side. The second slanted grooves 42 are grooves extending from the second shoulder 32 toward the tire equatorial plane S1, in which the slanted grooves 42 generally slope relative to the tire-circumferential direction while gradually curving so that the slanted grooves 42 extend toward the front side and is convex toward the rear side. Herein, each of the slanted grooves 41, 42 has an end close to the shoulder 30 (first shoulder 31, second shoulder 32) defined as a base end, and an end close to the tire equatorial plane S1 defined as a leading end.

The first slanted groove 41 includes a base-end side curved part 43 and a leading-end side curved part 44. The base-end side curved part 43 extends from the base end to a portion beyond the tire-width center of the first tread surface 21. The leading-end side curved part 44 which curves from an end close to the tire equatorial plane S1 of the base-end side curved part 43 toward the tire equatorial plane S1 and to the leading end. The base-end side curved part 43 curves with a relatively small curvature, and is slightly sloped toward the front side. The leading-end side curved part 44 curves with a similar curvature to the base-end side curved part 43, and slopes to the front side at a sharper angle than the base-end side curved part 43.

The second slanted groove 42 has a similar form to the first slanted groove 41. In other words, the second slanted groove 42 includes a based-end curved part 43 and a leading-end side curved part 44. The base-end curved part 43 extends from the base end to a portion beyond the tire-width center of the second tread surface 22. The leading-end side curved part 44 curves from an end close to the tire equatorial plane S1 of the base-end side curved part 43 toward the tire equatorial plane S1 to the leading end.

The plurality of first slanted grooves 41 arranged in the tire-circumferential direction have alternately different lengths. The leading end of the shorter first slanted grooves 41 terminates such that it merges with the second slanted groove 42 immediately before the tire equatorial plane S1. The leading end of the longer first slanted groove 41 passes through the tire equatorial plane S1, and then terminates after crossing the leading-end side curved part 44 of the two second slanted grooves 42 adjacent in the tire-circumferential direction.

The length of the second slanted grooves 42 also differ alternately in the tire-circumferential direction similarly to the first slanted grooves 41. In other words, the leading end of the shorter second slanted groove 42 terminates such that it merges with the first slanted groove 41 immediately before the tire equatorial plane S1. The leading end of the longer second slanted groove 42 passes through the tire equatorial plane S1, and then terminates after crossing the leading-end side curved part 44 of the two first slanted grooves 41 adjacent in the tire-circumferential direction.

The first communication groove 51 extends from the end of the leading-end side curved part 44 of the first slanted groove 41 close to the base-end side curved part 43, straight toward a bending point of the first slanted groove 41 on the front side in the tire-circumferential direction. The bending point is a point where the first slanted groove 41 transitions from the base-end side curved part 43 to the leading-end side curved part 44.

The second communication groove 52 is similar to the first communication groove 51, and extends from the end of the leading-end side curved part 44 of the second sloped groove 42 close to the base-end side curved part 43, straight to a bending point of the second slanted groove 42 on the front side in the tire-circumferential direction. The bending point is a point where the second sloped groove 42 transitions from the base-end side curved part 43 to the leading-end side curved part 44.

The first communication groove 51 and second communication groove 52 both slope relative to the tire-circumferential direction so as to be directed toward the outer side in the tire-circumferential direction, as extending from the rear side to the front side.

### (Blocks of Tread Pattern)

The blocks 13 of the tread pattern 11 include a plurality of shoulder blocks 60 arranged in the outermost positions in the tire-axial direction, a plurality of central blocks 70 arranged at the center in the tire-axial direction, and a plurality of intermediate blocks 80 arranged between the should blocks 60 and the central blocks 70 in the tire-axial direction.

The shoulder blocks 60 include first shoulder blocks 61 close to the first shoulder 31, and second shoulder blocks 62 close to the second shoulder 32.

Each of the first shoulder blocks 61 are defined as an approximately rectangular shapes by a pair of first slanted grooves 41 adjacent in the tire-circumferential direction, and the first communication groove 51. The edge of the first shoulder block 61 close to the first shoulder 31 continues to the outer surface of the first shoulder 31. The plurality of first shoulder blocks 61 are arranged in the tire-circumferential direction to sandwich the base-end side curved part 43 of the first slanted groove 41.

Each of the second shoulder blocks 62 is defined as approximately rectangular shape, by the pair of the second slanted grooves 42 adjacent in the tire-circumferential direction, and the second communication groove 52. The edge of the second shoulder block 62 close to the second shoulder 32 continues to the outer surface of the second shoulder 32. The plurality of second shoulder blocks 62 are arranged in the tire-circumferential direction to sandwich the base-end side curved parts 43 of the second slanted grooves 42.

The first shoulder blocks 61 and the second shoulder blocks 62, which are arranged in the tire-circumferential direction to sandwich the base-end side curved parts 43 of the slanted grooves 40, may be arranged at equal intervals in the tire-circumferential direction, or may be arranged at variable pitch, which are irregular intervals.

The central blocks 70 are arranged in a manner such that they span both the first tread surface 21 and second tread surface 22. In other words, the tire equatorial plane S1 passes through all of the central blocks 70. The plurality of central blocks 70 includes a plurality of first central blocks 71 existing mainly on the first tread surface 21, and a plurality of second central blocks 72 existing mainly on the second tread surface 22.

The first central block 71 has a larger proportion occupying the surface area in the first tread surface 21 than in the second tread surface 22. Each of the first central blocks 71 is defined as a substantially rectangular shape by the leading-end side curved parts 44 of the pair of first slanted grooves 41 adjacent in the tire-circumferential direction, and the leading-end side curved part 44 of the second slanted groove 42 having a greater length among the plurality of second slanted grooves 42.

The second central block 72 has a greater proportion occupying the surface area in the second tread surface 22 than in the first tread surface 21. Each of the second central blocks 72 is defined as a substantially rectangular shape, by the leading-end side curved parts 44 of the pair of second slanted grooves 42 adjacent in the tire-circumferential direction, and the leading-end side curved part 44 of the first slanted groove 41 having a larger length among the plurality of first slanted grooves 41.

The plurality of the first central blocks 71 and the plurality of second central blocks 72 are alternately arranged in the tire-circumferential direction.

The intermediate block 80 includes a first intermediate block 81 close to the first tread surface 21, and a second intermediate block 82 close to the second tread surface 22.

Each of the first intermediate block 81 is defined as an approximately rectangular shape by the leading-end side curved parts 44 of the pair of first slanted grooves 41 adjacent in the tire-circumferential direction, the first communication groove 51, and the leading-end side curved part 44 of the second slanted groove 42 having a longer length. The plurality of first intermediate blocks 81 are arranged in the tire-circumferential direction to sandwich the leading-end side curved part 44 of the first slanted groove 41.

Each of the second intermediate block 82 is defined as an approximately rectangular shape by the leading-end side curved parts 44 of the pair of second slanted grooves 42 adjacent in the tire-circumferential direction, the second communication groove 52, and the leading-end side curved part 44 of the second slanted groove 42 having a longer length. The plurality of second intermediate blocks 82 are arranged in the tire-circumferential direction to sandwich the leading-end side curved part 44 of the second slanted groove 42.

The first intermediate blocks 81 are arranged between the shoulder blocks 60 and the central blocks 70 in the tire-axial direction. The second intermediate blocks 82 are arranged between the shoulder blocks 60 and the central blocks 70 in the tire-axial direction.

As described above, the tire equatorial plane S1 passes through all of the central blocks 70. On the other hand, the tire equatorial plane S1 neither passes through the shoulder blocks 60 nor the intermediate blocks 80.

In the first tread surface 21, as the plurality of blocks 13 along the first slanted groove 41, block columns 13A and block columns 13B are alternately arranged in the tire-circumferential direction. The block column 13A includes, as the three blocks 13, the first shoulder block 61, the first intermediate block 81, and the first central block 71 that extend in this order from the first shoulder 31 toward the tire equatorial plane S1. The block column 13B includes, as the the two blocks 13, the first shoulder block 61 and the first intermediate block 81 that extend in this order from the first shoulder 31 toward the tire equatorial plane S1.

Similarly, in the second tread surface 22, as the plurality of blocks 13 along the second slanted groove 42, the block columns 13A and the block columns 13B are alternately arranged in the tire-circumferential direction. The block column 13A includes, as the three blocks 13, the second shoulder block 62, the second intermediate block 82, and the second central block 72 that extend in this order from the second shoulder 32 toward the tire equatorial plane S1. The block column 13B includes, as the two blocks 13, the second shoulder block 62 and second intermediate block 82 that extend in this order.

In both the first tread surface 21 and the second tread surface 22, the intermediate block 80 in the column without the central block 70 has a longer length in the extending direction along the slanted groove 40, than the intermediate block 80 in the column with the central block 70. On the other hand, the shoulder block 60 and the central block 70 have the equal length in the extending direction along the slanted groove 40.

### (Sipes of Blocks)

As shown in FIG. 1, each of the blocks 13 of the tread 10 has a plurality of sipes 14. The plurality of sipes 14 includes shoulder sipes 110, central sipes 120, and intermediate sipes 130. The shoulder sipes 110 are respectively formed in the first shoulder blocks 61 and the second shoulder blocks 62 (hereinafter, may be collectively called "shoulder block 60"). The central sipes 120 are respectively formed in the first central blocks 71 and the second central blocks 72 (hereinafter, may be collectively called "central block 70") The intermediate sipes 130 are respectively formed in the first intermediate blocks 81 and the second intermediate blocks 82 (hereinafter, may be collectively called "intermediate block 80"). All sipes have a smaller groove width than the aforementioned slanted grooves 40 and the communication grooves 50, and this groove width is no more than 1 mm. The number of the sipes 14 per each block 13 is arbitrary; however, sipes 14 of the number on the order of 2 to 5, for example, are arranged in one block 13.

The shoulder sipes 110, the central sipes 120 and the intermediate sipes 130 respectively open in the surfaces of the blocks 60, 70, and 80, and have a wavy shape as a whole in a tire surface view. The depth direction of the sipes 110, 120, 130 substantially follows the tire-radial direction.

As shown in FIG. 1, each shoulder block 60 respectively has a plurality of shoulder sipes 110. The shoulder sipes 110 extend almost straight as a whole. In each of the respective shoulder blocks 60, the plurality of shoulder sipes 110 are arranged in parallel to each other at intervals. The plurality of shoulder sipes 110 extend substantially in parallel to the extending direction of the shoulder blocks 60 along the slanted groove 40. In other words, the shoulder sipes 110 extend in the direction intersecting the tire-circumferential direction. The end on the tire-axial inner side (tire equatorial plan S1 side) of the shoulder sipe 110 communicates with the first communication groove 51 and the second communication groove 52 (hereinafter, may be collectively called "communication groove 50"). The end on the tire-axial outer side (shoulder 30 side) of the shoulder sipe 110 terminates without reaching the end on the tire-axial outer side of the shoulder block 60.

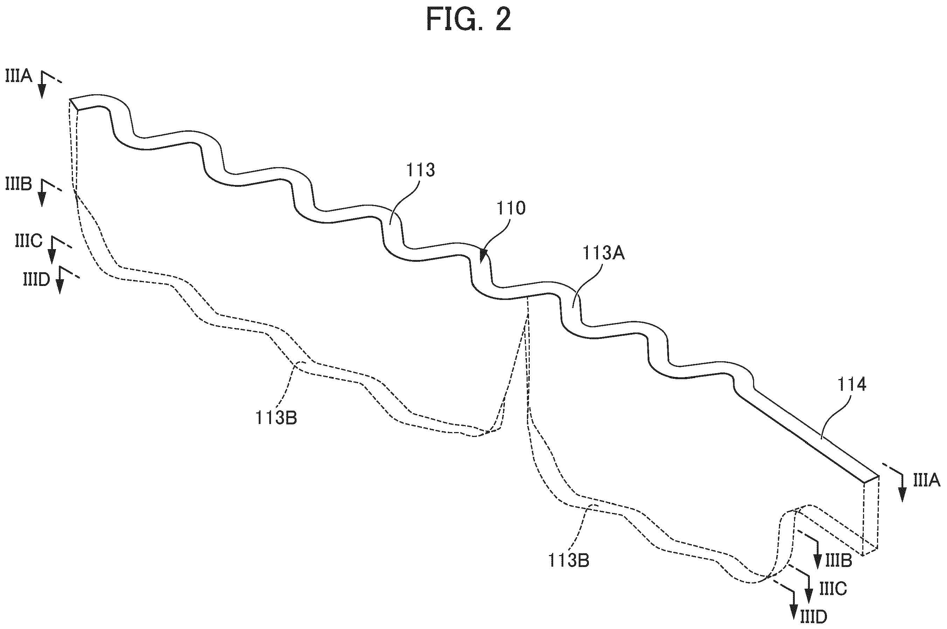

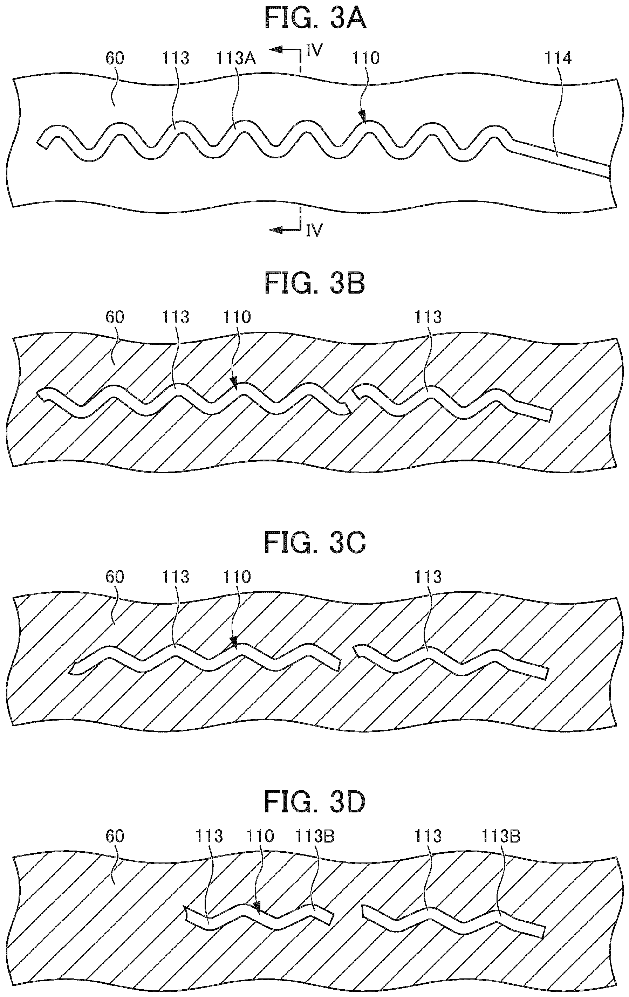

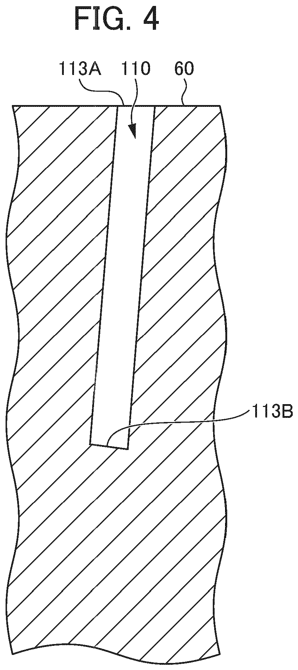

FIG. 2 is a perspective view showing one shoulder sipe 110. FIG. 3A is an arrow view along IIIA-IIIA in FIG. 2. FIG. 3B is a cross-sectional view along the line IIIB-IIIB in FIG. 2. FIG. 3C is a cross-sectional view along the line IIIC-IIIC in FIG. 2. FIG. 3D is a cross-sectional view along the line IIID-IIID in FIG. 2. FIG. 4 is a cross-sectional view along the line IV-IV in FIG. 3A.

As shown in FIG. 2, the shoulder sipe 110 has a wavy-shaped part 113 and a sipe bridge 114. The wavy-shape part 113 is formed in a wavy shape extending along the extending direction. The sipe bridge 114 extends straight from an end of the wavy shaped part 113 to the communication groove 50, and has a smaller depth than that of the wavy shaped part 113. In addition, the shoulder sipe 110 has an opening 113A in the surface of the shoulder block 60, and a bottom 113B. The wavy shaped part 113 occupies a large portion, e.g., at least 70% of the extending direction length of the shoulder sipe 110. The depth of the wavy shaped part 113, a length between the opening 113A and the bottom 113B, is set on the order of 5.0 mm to 7.0 mm, for example, and the depth of the sipe bridge 114 is set on the order of 2.0 mm to 4.0 mm, for example; however, they are not limited thereto.

As shown in FIG. 2 and FIGS. 3A to 3D, the wavy shaped part 113 of the shoulder sipe 110 is formed in a wavy shape having a fixed period and the wavy shape extends from the opening 113A to the bottom 113B. The amplitude of the wavy shape part 113 is largest at the opening 113A, and smallest at the bottom 113B. In other words, the shoulder sipe 110 has a wavy shape at the bottom 113B, and the bottom 113B does not have a linear shape. The amplitudes of the openings 113A at the surfaces of the shoulder blocks 60 of the plurality of shoulder sipes 110 are equal to each other. Furthermore, the amplitude of the shoulder sipe 110 decreases at a fixed or constant rate of change from the opening 113A to the bottom 113B. In addition, as shown in FIG. 4, the width of a gap between opposing inner surfaces of the shoulder sipe 110 has a substantially fixed dimension from the opening 113A to the bottom 113B. Accordingly, in a cross-sectional view in the depth direction which is substantially orthogonal to the extending direction of the shoulder sipe 110, as shown in FIG. 4, the shoulder sipe 110 is linear from the opening 113A to the bottom 113B. The width of the shoulder sipe 110 is preferably at least 0.5 mm and no more than 1.5 mm.

It should be noted that the shoulder sipe 110 of the embodiment has a portion in which part of the wavy shape part 113 is not continuous in the extending direction, i.e., a part is missing, as shown in FIG. 2 and FIGS. 3B to 3D. This is an example of some aspects of the shoulder sipe 110. The shoulder sipe 110 is not to be limited to this, and may have a continuous wave shape.

As shown in FIG. 1, each of the central blocks 70 has a plurality of central sipes 120. The central sipes 120 extend straight as a whole. In each of the central blocks 70, the plurality of central sipes 120 are arranged in parallel to each other at intervals. The plurality of central sipes 120 extend substantially in parallel with the tire-axial direction. In other words, the central sipe 120 extends in a direction intersecting the tire-circumferential direction. Each of both ends of the central sipe 120 is continuous with either the first slanted groove 41 or the second slanted groove 42 (hereinafter, may be collectively called "slanted groove 40").

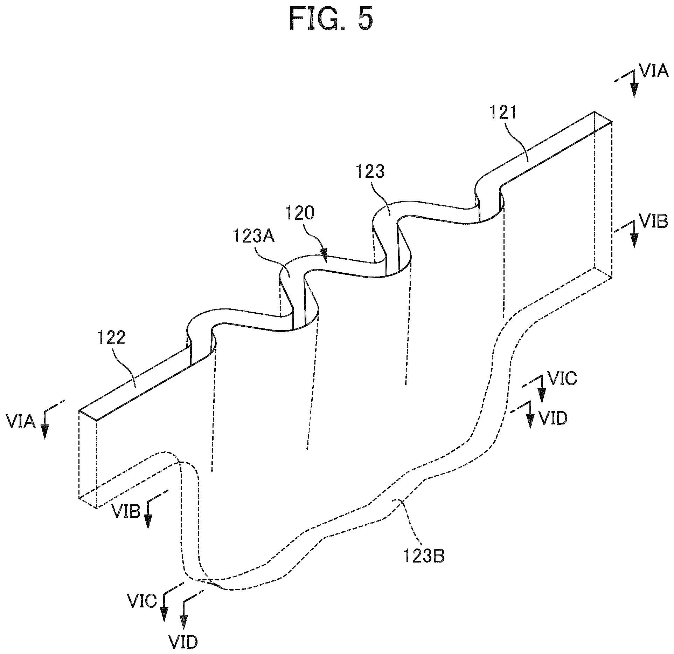

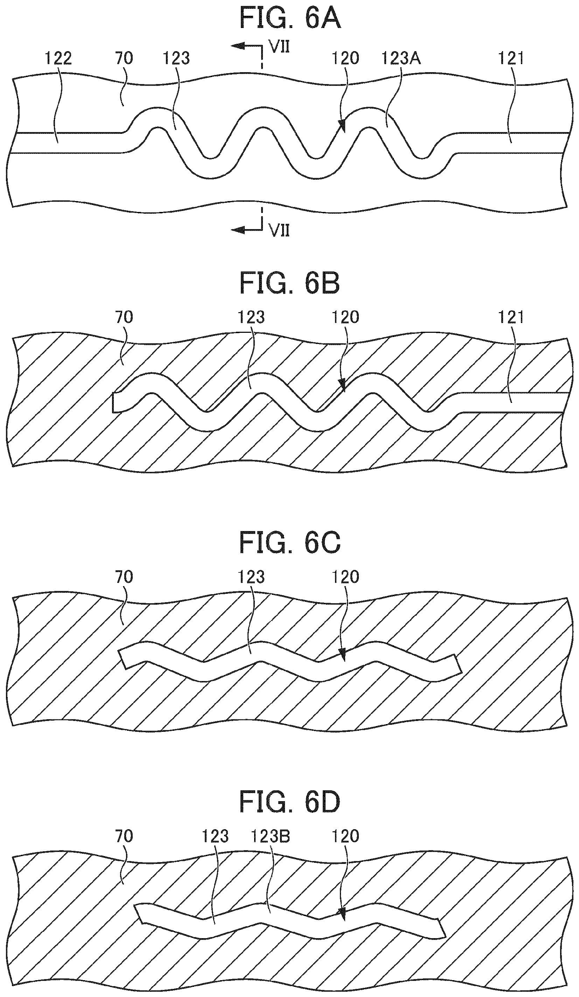

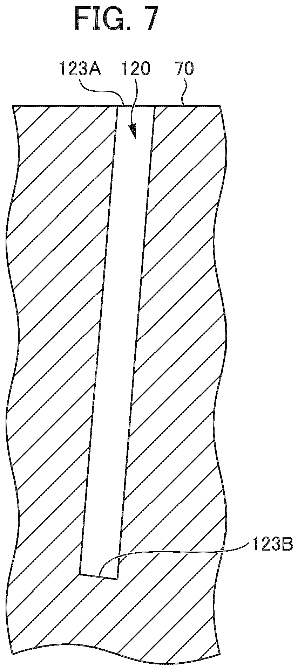

FIG. 5 is a perspective view showing one central sipe 120. FIG. 6A is an arrow view along VIA-VIA in FIG. 5. FIG. 6B is a cross-sectional view along the line VIB-VIB in FIG. 5. FIG. 6C is a cross-sectional view along the line VIC-VIC in FIG. 5. FIG. 6D is a cross-sectional view along the line VID-VID in FIG. 5. FIG. 7 is a cross-sectional view along the line VII-VII in FIG. 6A.

As shown in FIG. 5, the central sipe 120 includes a wavy shape part 123, a first sipe bridge 121, and a second sipe bridge 122. The wavy shape part 123 is formed in a wavy shape along the extending direction. The first sipe bridge 121 extends straight from one end of the wavy shape part 123 to the slanted groove 40, and has a smaller depth than the wavy shape part 123. The second sipe bridge 122 extends straight from the other end of the wavy shape part 123 to the slanted groove 40, and has a smaller depth than the first sipe bridge 121. In addition, the central sipe 120 includes an opening 123A at the surface of the central block 70, and a bottom 123B. The wavy shape part 123 occupies at least 50%, for example, of the length in the extending direction of the central sipe 120. The depth of the wavy shape part 123, i.e., a length between the opening 123A and the bottom 123B is set on the order of 6.0 mm to 7.0 mm, for example, the depth of the first sipe bridge 121 is set on the order of 4 mm, for example, and the depth of the second sipe bridge 122 is set on the order of 2 mm, for example; however, they are not limited thereto.

As shown in FIG. 5 and FIGS. 6A to 6D, the wavy shape part 123 of the central sipe 120 is formed in a wavy shape having a fixed period, and the wave shape extends from the opening 123A to the bottom 123B. The amplitude of the wavy shape part 123 is largest at the opening 123A, and smallest at the bottom 123B. In other words, the central sipe 120 has amplitude at the bottom 123B, and the bottom 123B does not have a linear shape. The amplitudes of the openings 123A in the surfaces of the central blocks 70 of the plurality of central sipes 120 are equal to each other. Furthermore, the amplitude of the central sipe 120 decreases at a fixed rate of change from the opening 123A to the bottom 123B. In addition, as shown in FIG. 7, the width of a gap between opposing inner surfaces of the central sipe 120 has a substantially fixed dimension from the opening 123A to the bottom 123B. Accordingly, in the cross-sectional view in the depth direction which is substantially orthogonal to the extending direction of the central sipe 120 as shown in FIG. 7, the central sipe 120 is linear from the opening 123A to the bottom 123B. The width of the central sipe 120 is preferably at least 0.5 mm and no more than 1.5 mm.

As shown in FIG. 1, each of the intermediate blocks 80 has a plurality of intermediate sipes 130. The intermediate sipe 130 extends straight as a whole. In each of the intermediate blocks 80, the plurality of intermediate sipes 130 are arranged in parallel to each other at intervals. The plurality of intermediate sipes 130 all slant relative to the tire-circumferential direction so as to be directed to the outer side in the tire-circumferential direction, as extending from the rear side to the front side. In other words, the intermediate sipe 130 extends in a direction which intersects the tire-circumferential direction. Each of both ends of the intermediate sipe 130 communicate with either the slanted groove 40 or the communication groove 50.

The intermediate sipe 130 has a similar configuration to the aforementioned central sipe 120. In other words, although omitted from illustration, the intermediate sipe 130 has similar portions to the wavy shape part 123, the first sipe bridge 121, and the second sipe bridge 122 of the central sipe 120. Then, the period of the wavy shape part of the intermediate sipe 130 is fixed, and the amplitude is largest at the opening at the surface of the central block 70, and smallest at the bottom. The amplitudes of the openings, at the surface of the intermediate blocks 80, of the plurality of intermediate sipes 130 are equal to each other. The width of the intermediate sipe 130 is substantially fixed from the opening to the bottom. Accordingly, in a cross-sectional view in the depth direction which is substantially orthogonal to the extending direction of the intermediate sipe 130, the intermediate sipe 130 is linear from the opening to the bottom. The width of the intermediate sipe 130 is preferably at least 0.5 mm and no more than 1.5 mm.

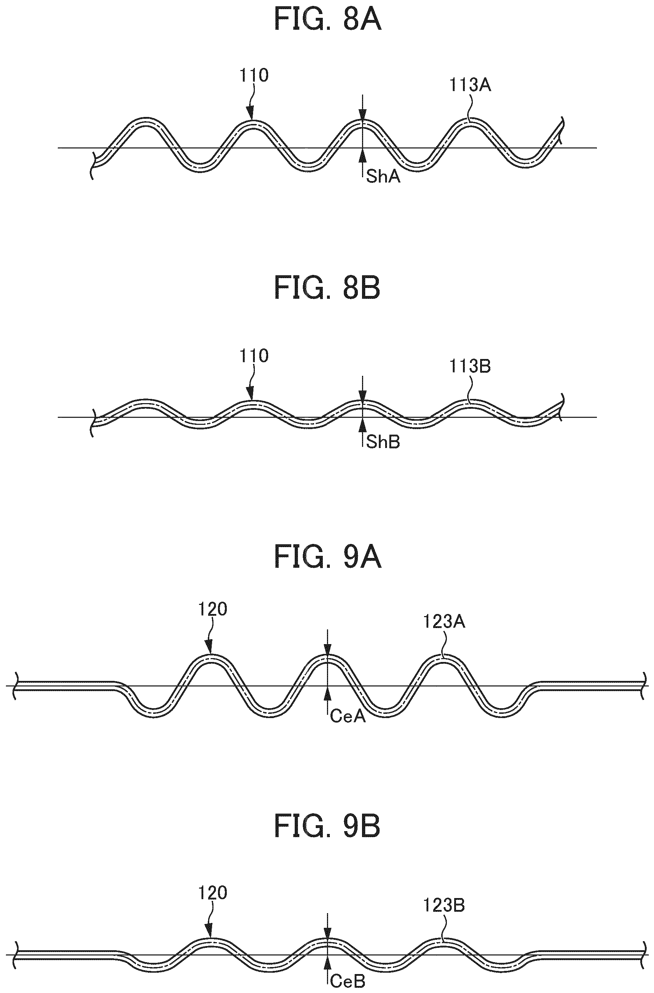

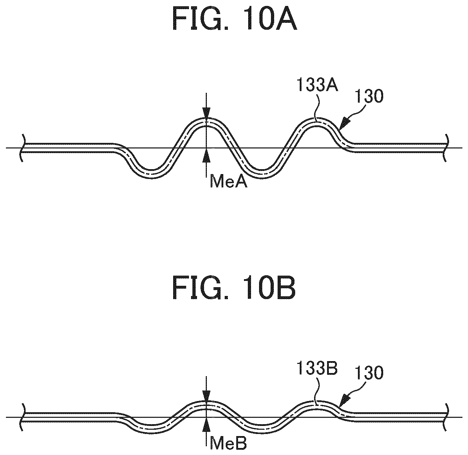

FIG. 8A is a plan view schematically showing an opening 113A of a wavy shape in the shoulder sipe 110, and shows amplitude ShA of the opening 113A. FIG. 8B is a plan view schematically showing a bottom 113B of a wavy shape in the shoulder sipe 110, and shows amplitude ShB of the bottom 113B. FIG. 9A is a plan view schematically showing an opening 123A of a wavy shape in the central sipe 120, and shows amplitude CeA of the opening 123A. FIG. 9B is a plan view schematically showing a bottom 123B of a wavy shape in the central sipe 120, and shows amplitude CeB of the bottom 123B. FIG. 10A is a plan view schematically showing an opening 133A of a wavy shape in the intermediate sipe 130, and shows amplitude MeA of the opening 133A. FIG. 10B is a plan view schematically showing a bottom 133B of a wavy shape in the intermediate sipe 130, and shows amplitude MeB of the bottom 133B.

In the embodiment, the above-mentioned amplitudes ShA, CeA and MeA are not equal. Specifically, the amplitude ShA of the shoulder sipe 110 is the smallest. The amplitude CeA of the central sipe 120 and the amplitude MeA of the intermediate sipe 130 are equal to each other, or the amplitude CeA of the central sipe 120 is greater than the amplitude MeA of the intermediate sipe 130. In other words, it is specified as "CeA ≧ MeA > ShA".

With the condition of "CeA ≧ MeA > ShA", these amplitudes CeA, MeA and ShA are preferably each at least 0.5 mm and no more than 1.5 mm.

In addition, the amplitude ShB of the bottom 113B of the shoulder sipe 110, the amplitude CeB of the bottom 123B of the central sipe 120, and the amplitude MeB of the bottom 133B of the intermediate sipe 130 are preferably each at least 0.1 mm and no more than 0.6 mm.

In addition, the ratio A/B for each sipe is preferably at least 4.0 and no more than 7.0, where A is the amplitudes of the openings 113A, 123A, 133A of the respective sipes 110, 120, 130, and B is the amplitudes of the bottoms 113B, 123B, 133B of the respective sipes 110, 120, 130. In other words, each of ShA/ShB of the shoulder sipe 110, CeA/CeB of the central sipe 120, and MeA/MeB of the intermediate sipe 130 is preferably at least 4.0 and no more than 7.0.

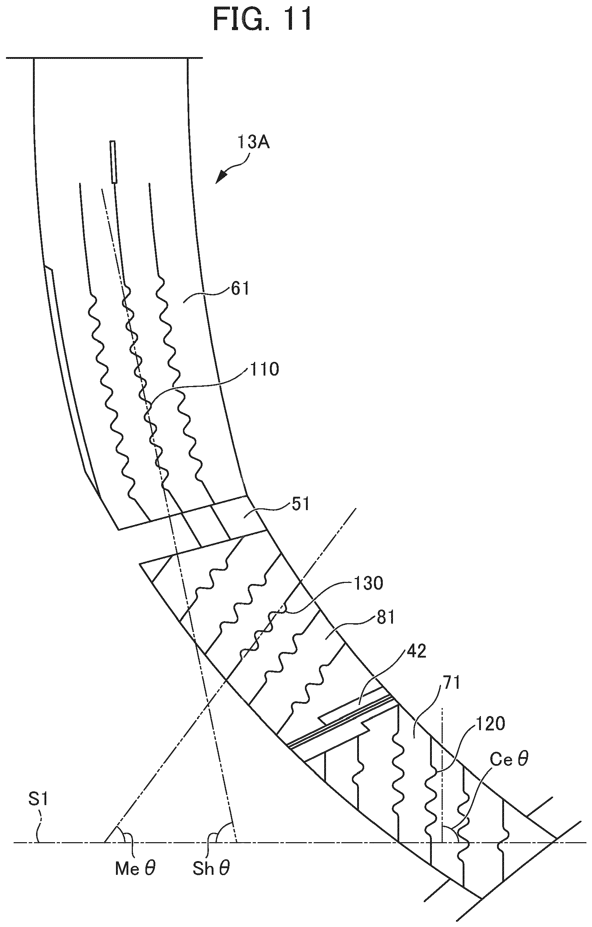

FIG. 11 is a plan view shown by excerpting the block column 13A, consisting of the first shoulder block 61, the first central block 71, and the first intermediate block 81, which extends along the first slanted groove 41, in the first tread surface 21. FIG. 11 illustrates angles in the extending direction of each sipe relative to the tire equatorial plane S1 along the tire-circumferential direction. An angle in the extending direction of the shoulder sipe 110 is defined as Shθ, an angle of the extending direction of the central sipe 120 is defined as Ceθ, and an angle of the extending direction of the intermediate sipe 130 as Meθ. These angles are all angles which intersect the tire equatorial plane S1 with an angle of at least 0° and no more than 90°. In the embodiment, these angles are specified as "Ceθ > Shθ > Meθ".

The above-mentioned angle Ceθ of the central sipe 120 is set at 90°, for example. The above-mentioned angle Shθ of the shoulder sipe 110 is set at 75°, for example. The above-mentioned angle Meθ of the intermediate sipe 130 is set at 53°, for example. However, so long as satisfying the above specified ranges, they are not limited thereto.

In each block, the sipes extend substantially in parallel to each other. Therefore, each of the plurality of sipes within the same block extends at the same angle relative to the tire equatorial plane S1. In other words, the above-mentioned angles Shθ of the plurality of shoulder sipes 110 in the same shoulder block 60 are the same angle as each other. The above-mentioned angles Ceθ of the plurality of central sipes 120 in the same central block 70 are the same as each other. The above-mentioned angles Meθ of the plurality of intermediate sipes 130 in the same intermediate block 80 are the same as each other.

It should be noted that, although omitted from illustration, the same angle specifications as above are established for the extending directions of each sipe in the second shoulder block 62, the second central block 72, and the second intermediate block 82 close to the second tread surface 22.

According to the tire 1 of the above-mentioned embodiment, the following effects are exerted.

(1) The tire 1 according to the embodiment includes a tread 10. The tread 10 includes blocks 13 having sipes 14 extending in a direction which intersects a tire-circumferential direction. The sipe 14 has a wavy shape in an extending direction of the sipe 14. The sipe 14 has an opening at a surface of the block 13 and a bottom. The wavy shape continues from the opening to the bottom. Amplitude of the sipe 14 is greatest at the opening and smallest at the bottom. The amplitude decreases at a fixed rate of change from the opening to the bottom, whereby the sipe 14 is linear from the opening to the bottom in a cross-sectional view in the depth direction which is substantially orthogonal to the extending direction of the sipe 14. The opening of the sipe referred to herein corresponds to the opening 113A of the shoulder sipe 110, the opening 123A of the central sipe 120, and opening 133A of the intermediate sipe 130. The bottom of the sipe referred to herein corresponds to the bottom 113B of the shoulder sipe 110, the bottom 123B of the central sipe 120, and the bottom 133B of the intermediate sipe 130.

The bottom of each of the sipes 14 in the embodiment does not have a linear shape along the extending direction of the sipe 14, but rather has a wavy shape. Upon stress acting on the block 13 of the tread surface 20 such as during braking or during starting off of the vehicle, both side portions on the sipe 14 of the block 13 tend to collapse according to the direction in which this stress acts. At this time, the bottom of the sipe 14 which has a wave shape as in the embodiment produces a force resisting stress and the forces is higher than that of the bottom of the sipe which has a a linear shape. This reduces the chances of distortion of the blocks 13, and the decline in contact area of the surface of the block 13. This improves the traction. In addition, since distortion of the block 13 is suppressed, defects such as block chipping where a part or the entirety of the block 13 comes off is suppressed, whereby durability of the tire 1 improves.

In each of the sipes 14 of the embodiment, the amplitude decreasing at a fixed rate of change from the opening to the bottom in the surface of each block 13 allows each of the sipes 14 to be linear from the opening to the bottom, in a cross-sectional view in the depth direction which is substantially orthogonal to the extending direction of each sipe 14. Accordingly, the bottom of the sipe 14 functions as the aforementioned starting point for collapse of the block 13. In addition, since both the side portions of the sipe 14 of the block 13 tend to engage, the traction improves. The improvement in traction improves cornering performance and handling stability.

(2) In the tire 1 of the above (1) according to the embodiment, the amplitude of the opening, which is at the surface of the block 13, of the sipe 14 is preferably at least 0.5 mm and no more than 1.5 mm.

The aforementioned effects thereby tend to be achieved.

(3) In the tire 1 of the above (1) or (2) according to the embodiment, the amplitude of the bottom of the sipe 14 is preferably at least 0.1 mm and no more than 0.6 mm.

The aforementioned effects thereby tend to be achieved.

(4) In the tire 1 of any one of the above (1) to (3) according to the embodiment, a width of the sipe 14 is preferably at least 0.5 mm and no more than 1.5 mm.

The aforementioned effects thereby tend to be achieved.

(5) In the tire 1 of any one of the above (1) to (4) according to the embodiment, the ratio As/Ab is preferably at least 4.0 and no more than 7.0, where AS is amplitude of the opening at the surface of the block 13 of the sipe 14, and Ab is amplitude of the bottom of the sipe 14.

The aforementioned effects thereby tend to be achieved.

(6) The tire 1 according to the embodiment includes a tread 10. The tread 10 includes a plurality of blocks 13 arranged in the tire-circumferential direction. The plurality of blocks 13 includes a plurality of shoulder blocks 60 arranged in an outermost area in the tire-axial direction, a plurality of central blocks 70 arranged at the center in the tire-axial direction, and a plurality of intermediate blocks 80 arranged between the shoulder blocks 60 and central blocks 70 in the tire-axial direction. The shoulder block 60 has at least one shoulder sipe 110 having a wavy shape in a tire surface view, and extending in a direction which intersects the tire-circumferential direction. The central block 70 has at least one central sipe 120 having a wavy shape in a tire surface view and extending in a direction which intersects the tire-circumferential direction. The intermediate block 80 has at least one intermediate sipe 130 having a wavy shape in a tire surface view, and extending in a direction which intersects the tire-circumferential direction. A relationship of CeA ≧ MeA > ShA is established where Sha is an amplitude in a tire surface of the shoulder sipe 110, CeA is an amplitude in a tire surface of the central sipe 120, and MeA is amplitude in a tire surface of the intermediate sipe 130.

Generally, for a pneumatic tire , the contact pressure on a block arranged in the region of the shoulder tends to increase, particularly, the area around the sipe, which has the wavy shape with a large amplitude, tends to be subject to great pressure. Herein, in the tire 1 of the embodiment, the amplitude in the tire surface of the shoulder sipe 110 of the shoulder block 60 is set to be smaller than that of the central sipe 120 of the central block 70 and that of the intermediate sipe 130 of the intermediate block 80. This disperses the contact pressure acting on the shoulder block 60, thus reducing the chances of distortion in both the side portions of the shoulder sipe 110. This further reduces the chances of defects such as localized wear and block chipping in the shoulder block 60. This suppressing of localized wear and block chipping enables running stability on a snowy road surface, because the shoulder block 60 contributes to running stability particularly on a snowy road surface.

The intermediate block 80 largely affects running stability on dry road surfaces, and also affects the running stability on snowy road surfaces. Herein, the amplitude of the intermediate sipe 130 of the intermediate block 80 is greater than the amplitude of the shoulder sipe 110, and is equal to or smaller than the central sipe 120. This ensures running stability on both dry road surfaces and snowy road surfaces.

(7) In the tire 1 of the above (6) according to the embodiment, the relationship of Ceθ > Shθ > Meθ is preferably established, where Shθ is the angle of the extending direction of the shoulder sipe 110 relative to the tire-circumferential direction in a range of between 0° and 90° inclusive, Ceθ is the angle of the extending direction of the central sipe 120 relative to the tire-circumferential direction in a range between 0° and 90° inclusive, and Meθ is the angle of the extending direction of the intermediate sipe 130 relative to the tire-circumferential direction in a range between 0° and 90° inclusive.

The traction during acceleration and braking on a dry road surface, and grip performance by the edge effect on a snowy road surface are exhibited with good balance.

(8) In the tire 1 of the above (6) or (7) according to the embodiment, the shoulder block 60 has a plurality of shoulder sipes 110, the central block 70 has a plurality of central sipes 120, the intermediate block 80 has a plurality of intermediate sipes 130. Amplitudes in the tire surface of the plurality of shoulder sipes 110 are equal to each other. Amplitudes in the tire surface of the plurality of central sipes 120 are equal to each other. Amplitudes in the tire surface of the plurality of intermediate sipes 130 are equal to each other.

This uniforms the amount of collapse during block collapse, thereby suppressing block chipping.

(9) In the tire 1 of any one of the above (6) to (8) according to the embodiment, the shoulder block 60 has a plurality of shoulder sipes 110, the central block 70 has a plurality of central sipes 120, the intermediate block 80 has a plurality of intermediate sipes 130. Preferably, Shθ of the plurality of shoulder sipes 110 are equal to each other, Ceθ of the plurality of central sipes 120 are equal to each other, and Meθ of the plurality of intermediate sipes 130 are equal to each other.

Since unification of the collapsing direction during block collapse and uniformity in the collapsing amount are achieved on each road surface such as a dry road surface, wet road surface and snowy road surface, traction is stable, along the effect of grip performance and block chipping suppression being exhibited with good balance.

(10) In the tire 1 of any one of the above (6) to (9) according to the embodiment, one side in the tire-circumferential direction is defined as the tire rotational direction in a state where the tire is mounted to a vehicle is preferably determined.

This achieves unification of the collapsing direction during block collapse and uniformity in the collapsing amount are achieved on road surfaces such as a dry road surface, a wet road surface, and a snowy road surface. Accordingly, traction stabilizes, along with a feature of grip performance and block chipping suppress are exhibited with good balance.

It should be noted that the present invention is not limited to the above-mentioned embodiment.

For example, the wavy shape part of each sipe may be a wavy shape with the period of a trigonometric function. The wavy shape part of each sipe may be a wavy shape in which only the vertex part may be the R shape of a relatively large curvature, and the vertexes are connected with each other with straight lines. R of the vertex, or the radius of curvature of the R portion transitioning from the sipe bridge to the wavy shape part is arbitrary; however, it may be on the order of 0.6 mm, for example.

### EXPLANATION OF REFERENCE NUMERALS

1 tire (pneumatic tire)
10 tread
13 block
60 shoulder block
70 central block
80 intermediate block
110 shoulder sipe
120 central sipe
130 intermediate sipe

## Claims

1. A pneumatic tire (1) comprising a tread (10), wherein
the tread (10) includes a plurality of blocks (13) arranged in a tire-circumferential direction,
the plurality of blocks (13) includes:
a plurality of shoulder blocks (60) arranged in an outermost area in a tire-axial direction;
a plurality of central blocks (70) arranged at a center in the tire-axial direction; and
a plurality of intermediate blocks (80) arranged between the shoulder block (60) and the central block (70) in the tire-axial direction,
the shoulder block (60) has at least one shoulder sipe (110) having a wavy shape in a tire surface view, and extending in a direction which intersects the tire-circumferential direction,
the central block (70) has at least one central sipe (120) having a wavy shape in a tire surface view, and extending in the direction which intersects the tire-circumferential direction, and
the intermediate block (80) has at least one intermediate sipe (130) having a wavy shape in a tire surface view, and extending in the direction which intersects the tire-circumferential direction,
the pneumatic tire (1) being **characterized in that**
a relationship of CeA ≧ MeA > ShA is established where
ShA is amplitude in a tire surface of the shoulder sipe (110),
CeA is amplitude in a tire surface of the central sipe (120), and
MeA is amplitude in a tire surface of the intermediate sipe (130).

2. The pneumatic tire (1) according to claim 1, **characterized in that** a relationship of Ceθ > Shθ > Meθ is established where
Shθ is an angle in an extending direction of the shoulder sipe (110) relative to the tire-circumferential direction in a range between 0° and 90° inclusive,
Ceθ is an angle in an extending direction of the central sipe (120) relative to the tire-circumferential direction in a range between 0° and 90° inclusive, and
Meθ is an angle in an extending direction of the intermediate sipe (130) relative to the tire-circumferential direction in a range between 0° and 90° inclusive.

3. The pneumatic tire (1) according to claim 2, **characterized in that** the shoulder block (60) has a plurality of the shoulder sipes (110),
the central block (70) has a plurality of the central sipes (120),
the intermediate block (80) has a plurality of the intermediate sipes (130),
the Shθ of the plurality of the shoulder sipes (110) are equal to each other,
the Ceθ of the plurality of the central sipes (120) are equal to each other, and
the Meθ of the plurality of the intermediate sipes (130) are equal to each other.

4. The pneumatic tire (1) according to any one of claims 1 to 3, **characterized in that** the shoulder block (60) has a plurality of the shoulder sipes (110),
the central block (70) has a plurality of the central sipes (120),
the intermediate block (80) has a plurality of the intermediate sipes (130),
amplitudes in a tire surface of the plurality of the shoulder sipes (110) are equal to each other,
amplitudes in a tire surface of the plurality of the central sipes (120) are equal to each other, and
amplitudes in a tire surface of the plurality of the intermediate sipes (130) are equal to each other.

5. The pneumatic tire (1) according to any one of claims 1 to 4, **characterized in that** one side of the tire-circumferential direction is defined as a tire-rotational direction in a state where the pneumatic tire (1) is mounted to a vehicle.

## Patentansprüche

1. Luftreifen (1), umfassend eine Lauffläche (10), wobei
die Lauffläche (10) eine Vielzahl von Blöcken (13), die in einer Reifenumfangsrichtung angeordnet sind, einschließt,
die Vielzahl von Blöcken (13) einschließt:
eine Vielzahl von Schulterblöcken (60), die in einem äußersten Bereich in einer Reifenaxialrichtung angeordnet sind;
eine Vielzahl von Mittelblöcken (70), die an einer Mitte in der Reifenaxialrichtung angeordnet sind; und
eine Vielzahl von Zwischenblöcken (80), die zwischen dem Schulterblock (60) und dem Mittelblock (70) in der Reifenaxialrichtung angeordnet sind,
der Schulterblock (60) mindestens eine Schulterlamelle (110) aufweist, die eine wellige Form in einer Reifenoberflächenansicht aufweist und sich in eine Richtung erstreckt, die die Reifenumfangsrichtung schneidet,
der Mittelblock (70) mindestens eine Mittellamelle (120) aufweist, die eine wellige Form in einer Reifenoberflächenansicht aufweist und sich in die Richtung erstreckt, die die Reifenumfangsrichtung schneidet, und
der Zwischenblock (80) mindestens eine Zwischenlamelle (130) aufweist, die eine wellige Form in einer Reifenoberflächenansicht aufweist und sich in die Richtung erstreckt, die die Reifenumfangsrichtung schneidet,
der Luftreifen (1) **dadurch gekennzeichnet ist, dass**
eine Beziehung von CeA ≧ MeA > ShA hergestellt wird, bei der
ShA eine Amplitude in einer Reifenoberfläche der Schulterlamelle (110) ist,
CeA die Amplitude in einer Reifenoberfläche der Mittellamelle (120) ist und
MeA die Amplitude in einer Reifenoberfläche der Zwischenlamelle (130) ist.

2. Luftreifen (1) nach Anspruch 1, **dadurch gekennzeichnet, dass** eine Beziehung von Ceθ > Shθ > Meθ hergestellt wird, bei der
Shθ ein Winkel in einer Erstreckungsrichtung der Schulterlamelle (110) relativ zu der Reifenumfangsrichtung in einem Bereich zwischen 0° und einschließlich 90° ist,
Ceθ ein Winkel in einer Erstreckungsrichtung der Mittellamelle (120) relativ zu der Reifenumfangsrichtung in einem Bereich zwischen 0° und einschließlich 90° ist und
Meθ ein Winkel in einer Erstreckungsrichtung der Zwischenlamelle (130) relativ zu der Reifenumfangsrichtung in einem Bereich zwischen 0° und einschließlich 90° ist.

3. Luftreifen (1) nach Anspruch 2, **dadurch gekennzeichnet, dass** der Schulterblock (60) eine Vielzahl der Schulterlamellen (110) aufweist,
der Mittelblock (70) eine Vielzahl der Mittellamellen (120) aufweist,
der Zwischenblock (80) eine Vielzahl der Zwischenlamellen (130) aufweist,
die Shθ der Vielzahl der Schulterlamellen (110) einander gleich sind,
die Ceθ der Vielzahl der Mittellamellen (120) einander gleich sind und
die Meθ der Vielzahl der Zwischenlamellen (130) einander gleich sind.

4. Luftreifen (1) nach einem der Ansprüche 1 bis 3,
**dadurch gekennzeichnet, dass** der Schulterblock (60) eine Vielzahl der Schulterlamellen (110) aufweist,
der Mittelblock (70) eine Vielzahl der Mittellamellen (120) aufweist,
der Zwischenblock (80) eine Vielzahl der Zwischenlamellen (130) aufweist,
die Amplituden in einer Reifenoberfläche der Vielzahl der Schulterlamellen (110) einander gleich sind,
die Amplituden in einer Reifenoberfläche der Vielzahl der Mittellamellen (120) einander gleich sind und
die Amplituden in einer Reifenoberfläche der Vielzahl der Zwischenlamellen (130) einander gleich sind.

5. Luftreifen (1) nach einem der Ansprüche 1 bis 4,
**dadurch gekennzeichnet, dass** eine Seite der Reifenumfangsrichtung als eine Reifendrehrichtung in einem Zustand definiert ist, in dem der Luftreifen (1) an einem Fahrzeug montiert ist.

## Revendications

1. Pneumatique (1) comprenant une bande de roulement (10), dans lequel
la bande de roulement (10) comporte une pluralité de blocs (13) agencés dans une direction circonférentielle du pneu,
la pluralité de blocs (13) comporte :
une pluralité de blocs d'épaulement (60) agencés dans une zone la plus extérieure dans une direction axiale du pneu ;
une pluralité de blocs centraux (70) agencés au niveau d'un centre dans la direction axiale du pneu ; et
une pluralité de blocs intermédiaires (80) agencés entre le bloc d'épaulement (60) et le bloc central (70) dans la direction axiale de pneu,
le bloc d'épaulement (60) présente au moins une lamelle d'épaulement (110) présentant une forme ondulée dans une vue de surface de pneu et s'étendant dans une direction qui croise la direction circonférentielle de pneu,
le bloc central (70) présente au moins une lamelle centrale (120) présentant une forme ondulée dans une vue de surface de pneu et s'étendant dans la direction qui croise la direction circonférentielle de pneu, et
le bloc intermédiaire (80) présente au moins une lamelle intermédiaire (130) présentant une forme ondulée dans une vue de surface de pneu et s'étendant dans la direction qui croise la direction circonférentielle de pneu,
le pneumatique (1) étant **caractérisé en ce qu'**
une relation CeA ≧ MeA > ShA est établie où
ShA est une amplitude dans une surface de pneu de la lamelle d'épaulement (110),
CeA est une amplitude dans une surface de pneu de la bande centrale (120), et
MeA est une amplitude dans une surface de pneu de la bande intermédiaire (130).

2. Pneumatique (1) selon la revendication 1, **caractérisé en ce qu'** une relation Ceθ > Shθ > Meθ est établie où
Shθ est un angle dans une direction d'extension de la lamelle d'épaulement (110) par rapport à la direction circonférentielle de pneu dans une plage comprise entre 0 ° et 90° inclus,
Ceθ est un angle dans une direction d'extension de la lamelle centrale (120) par rapport à la direction circonférentielle de pneu dans une plage comprise entre 0 ° et 90 ° inclus, et
Meθ est un angle dans une direction d'extension de la lemelle intermédiaire (130) par rapport à la direction circonférentielle de pneu dans une plage comprise entre 0 ° et 90 ° inclus.

3. Pneumatique (1) selon la revendication 2, **caractérisé en ce que** le bloc d'épaulement (60) présente une pluralité de lamelles d'épaulement (110),
le bloc central (70) présente une pluralité des lamelles centrales (120),
le bloc intermédiaire (80) présente une pluralité des lamelles intermédiaires (130),
les Shθ de la pluralité des lamelles d'épaulement (110) sont égales entre elles,
les Ceθ de la pluralité des lamelles centrales (120) sont égales entre elles, et
les Meθ de la pluralité des lamelles intermédiaires (130) sont égales entre elles.

4. Pneumatique (1) selon l'une quelconque des revendications 1 à 3, **caractérisé en ce que** le bloc d'épaulement (60) présente une pluralité des lamelles d'épaulement (110),
le bloc central (70) présente une pluralité des lamelles centrales (120),
le bloc intermédiaire (80) présente une pluralité des lamelles intermédiaires (130),
des amplitudes dans une surface de pneu de la pluralité des lamelles d'épaulement (110) sont égales entre elles,
des amplitudes dans une surface de pneu de la pluralité des lamelles centrales (120) sont égales entre elles, et
des amplitudes dans une surface de pneu de la pluralité des lamelles intermédiaires (130) sont égales entre elles.

5. Pneumatique (1) selon l'une quelconque des revendications 1 à 4, **caractérisé en ce qu'** un côté de la direction circonférentielle de pneu est défini comme une direction de rotation de pneu dans un état où le pneumatique (1) est monté sur un véhicule.
